# EUROPÄISCHE PATENTANMELDUNG

(11) **EP 0 982 890 A1**
(43) Veröffentlichungstag der Anmeldung: **01.03.2000**
(21) Anmeldenummer: 98116322.3
(22) Anmeldetag: 28.08.1998
(51) Int. Cl.: H04J 3/06

(54) **Telekommunikationssystem sowie Verfahren zum Erzeugen eines Haupttaktes in demselben**

(71) Anmelder: SIEMENS AKTIENGESELLSCHAFT, 80333 München (DE)
(72) Erfinder: Hennen, Stefan Dipl.-Ing., 82131 Gauting (DE); Roder, Annette Dipl.-Ing., 81377 München (DE); Skorka, Klemens Dr., 80807 München (DE); Steinigke, Klaus Dr., 81371 München (DE); Belgardt, Eckhardt Dip.-Ing., 81737 München (DE)

(57) **Zusammenfassung**

Telekommunikationssysteme müssen auf eine externe Taktquelle synchronisiert werden. Dazu werden mindestens zwei zueinander redundante Referenztakte verwendet. Bei einem Ausfall eines Referenztaktes wird der Hauptprozessor darüber informiert, der nachfolgend den Haupttaktgenerator anweist, auf einen redundanten Referenztakt umzuschalten. Durch die damit verbundene Zeitverzögerung können Datenfehler auf der Übertragungsstrecke auftreten. Die Erfindung soll die Störanfälligkeit des Telekommunikationssystems verringern. Die peripheren Plattformen des Telekommunikationssystems stellen mit Hilfe eines Gütedetektors 6 die Abnahme der Qualität oder den Ausfall eines Taktsignals fest und unterbrechen die Weiterleitung des Taktsignals an den Haupttaktgenerator 2. Der Haupttaktgenerator 2 stellt mittels eines Unterbrechungsdetektors 7 die Unterbrechung fest und schaltet auf einen redundanten Referenztakt um. Das Verfahren zum Erzeugen eines Haupttaktes umfaßt die Schritte des Ermittelns von Taktqualitäten und des Unterbrechens des Taktsignales, falls dessen Qualität abnimmt.

## Beschreibung

Telekommunikationssystem sowie Verfahren zum Erzeugen eines Haupttaktes in demselben

Die Erfindung bezieht sich auf ein Telekommunikationssystem gemäß dem Oberbegriff des Patentanspruchs 1 sowie auf ein Verfahren zum Erzeugen eines Haupttaktes in einem solchen Telekommunikationssystem. Insbesondere bezieht sich die Erfindung auf digitale Telekonmmunikationssysteme mit wenigstens zwei zueinander redundanten Referenztakten und Vorrichtungen und Verfahren zur Ausfallbehandlung eines der Referenztakte.

Der Begriff Telekommunikation ist eine Sammelbezeichnung für alle nachrichtentechnischen Übertragungsverfahren durch vielfältige Dienste bei der Kommunikation über größere Entfernungen zwischen Mensch-Mensch, Mensch-Maschine und Maschine-Maschine. Durch das Zusammenwachsen von Informations- und Kommunikationstechnik erhält die Telekommunikation eine ganz besondere Bedeutung. Die Telekommunikation ist durch die Übertragungstechnik mit Kabelübertragungstechnik, Sprech- und Datenfunk, Satellitentechnik, Lichtwellenleitertechnik, Modems, digitale Vermittlungsanlagen und Vermittlungstechnik und lokale Netze gekennzeichnet.

Um einen sinnvollen Nachrichtenaustausch zwischen zwei (oder mehreren) Partnern zu ermöglichen, ist neben der reinen Übertragung von Nachrichten ein Regelwerk erforderlich, das die für eine sinnvolle Kommunikation einzuhaltenden Konventionen in Form von Protokollen festlegt. Derartige Regeln werden z.B. in den Dienstspezifikationen der einzelnen Ebenen des OSI-Referenzmodells (Open Systems Interconnection) beschrieben. Das OSI-Referenzmodell wurde im Jahre 1983 von der Internationalen Standardisierungsorganisation (ISO) ausgehend von der Übertragung von Informationen im Bereich der Datenverarbeitung erstellt und hat inzwischen eine sehr weite Verbreitung auch in den Anwendungen der Kommunikationssysteme gefunden. Das OSI-Modell stellt lediglich Prinzipien der Nachrichtenübertragung dar und definiert folglich nur die Logik des Informationsflusses zwischen Teilnehmern. Da der OSI-Standard keine Festlegungen über die physikalische Übertragung von Kommunikation beinhaltet, ist er herstellerunabhängig, bedarf jedoch zur Realisierung eines Kommunikationssystems ergänzende Protokolle zur detaillierteren Festlegung basierend auf weiteren, z.B. proprietären Standards.

Prinzipiell kann die asynchrone von der synchronen Kommunikation unterschieden werden. Unter asynchroner Kommunikation wird im allgemeinen der zeitlich völlig entkoppelte Austausch von Nachrichten zwischen einer Sende- und einer Empfangs instanz verstanden. Es ist nicht vorhersehbar, wann eine Sende- und die zugehörige Empfangsoperation angestoßen wird.

Demgegenüber wird unter synchroner Kommunikation der Austausch von Nachrichten zwischen einer Sende- und einer Empfangs instanz verstanden, falls dieser Austausch in einem festen Zeitraster geschieht. Dabei müssen eine Sende- und die zugehörige Empfangsoperation immer zeitgleich ausgeführt werden.

Telekommunikationsnetzwerke sind durch die Möglichkeit des bi- und multidirektionalen Datenaustausches zwischen den Teilnehmern gekennzeichnet. Dies setzt voraus, daß jeder beteiligte Teilnehmer mit jedem anderen über dasselbe Medium kommunizieren kann. Die einfachste Realisierung hierzu ist die Kommunikation aller Teilnehmer im Basisband. Aufgrund der Vielzahl paralleler aktiver Teilnehmer kommen hier vornehmlich Verfahren zum Einsatz, die den Teilnehmern die verfügbare Bandbreite im Zeitmultiplex statisch zuordnen. Aufgrund der steigenden Nutzung der Lichtwellenleiter-Technik, der Notwendigkeit einer verbesserten interkontinentalen Datenkommunikation und den gestiegenen Leistungsanforderungen, wird die seit den 60er Jahren vorherrschende Plesiochrone Digitale Hierarchie (PDH) zunehmend durch die Synchrone Digitale Hierarchie (SDH) abgelöst. Der von der International Telekommunications Union (ITU) verabschiedete internationale Standard SDH resultierte aus dem amerikanischen Standard SONET (Synchronous Optical Network), der aus dem von der Firma Bellcore in den USA entwickelten und von dem Industrial Carriers Compatibility Forum (ICCF) 1984 übernommenen Standard hervorgeht.

Traditionelle Telekommunikationsstrukturen basieren auf Zeitmultiplexverfahren (TDM, Time Division Multiplexing). Dem gegenüber sendet ATM (Asynchronous Transfer Mode) Daten lediglich dann, wenn dies erforderlich ist, d. h. Rahmen werden asynchron gesendet. Die ersten Empfehlungen zu ATM wurden in den Jahren 1990/91 veröffentlicht, und sowohl die ITU als auch das im September 1991 gegründete ATM-Forum befaßten sich mit der Standardisierung von ATM.

Wie auch andere Übertragungsverfahren, basiert ATM grundsätzlich auf einer Paketübertragungstechnik. Ähnlich dem OSI-Referenzmodell ist auch ATM vertikal in mehrere Schichten unterteilt. Darüber hinaus wird eine horizontale Gliederung nach Aspekten des Datenaustausches zwischen Nutzern, Aspekten der Kommunikationssteuerung und Managementaspekten vorgenommen. Eine Abbildung der einzelnen ATM-Schichten auf die Schichten des OSI-Referenzmodells ist nicht ohne weiteres möglich, da die Funktionen der ATM Schichten zum Teil über verschiedene OSI-Schichten verteilt sind. In OSI-Terminologie wäre ATM auf der Bitübertragungsebene angesiedelt, bietet darüber hinaus jedoch auch noch einige Funktionen der Sicherungsebene.

ATM nutzt zur Übertragung ausschließlich Pakete mit einer festen Länge von 53 Bytes. Diese starre Übertragungseinheit wird als ATM-Zelle bezeichnet und besteht aus einem fünf Bytes langen Header sowie aus 48 Bytes Nutzinformation (Payload). Je nach Belegung der Bits 5-8 des ersten Headerbytes werden UNI-Zellen von NNI-Zellen unterschieden.

Um eine schrittweise Einführung des ATM-Übertragungsverfahrens sowohl in Weitverkehrsnetzen als auch in lokalen Netzen zu ermöglichen, ist ATM nicht an ein bestimmtes Übertragungsmedium gebunden. Die physikalische Schicht gliedert sich daher in eine medienabhängige Teilschicht (PM) und eine vom Übertragungsmedium unabhängige Teilschicht (TC). Die Übertragung einer Zelle geschieht dabei in einem konutinuierlichen Zellenstrom. Eine Festzuordnung zwischen virtuellen ATM-Kanälen und Zeitschlitzen des Medium besteht nicht. Vielmehr werden jedem virtuellen Kanal je nach benötigter Bandbreite mehrere Zeitschlitze hintereinander dynamisch zugeordnet. Die Asynchronität bei ATM besteht daher nicht in einem zeitlich asynchronen Zugriff auf das Übertragungsmedium, sondern in der dynamischen Vergabe der für einen virtuellen Kanal nutzbaren Bandbreite anhand der Anzahl der benötigten Zeitschlitze.

Die direkte Übertragung von ATM-Zellen ist die effizienteste, da ein zusätzlicher Overhead durch die Anpassung auf die Übertragungsrahmen des Mediums entfällt. Statt dessen wird der Zellenstrom direkt Bit für Bit übertragen. Dabei besteht der wesentliche Nachteil der direkten Zellübertragung in der Inkompatibilität zu bisherigen Übertragungsverfahren in Weitverkehrsnetzen, da die Infrastruktur dieser Netze hauptsächlich auf PDH- und SDH-Systemen beruht.

Die Übertragung über SDH basiert auf der Verschachtelung mehrerer ATM-Zellen in den Synchronen Transportmodulen der SDH-Hierarchie. Die Übertragung von ATM-Zellen über SDH ist bislang für SDH-Übertragungsraten von 155 Mbps und 622 Mbps spezifiziert (STM-1 und STM-4). Vorgesehen ist darüber hinaus die Nutzung der STM-16-Hierarchiestufe mit 2,5 Gbps.

Ebenso wie eine ATM-Übertragung über SDH ist auch die Nutzung bestehender PDH-Netze durch die ITU vorgesehen. Normiert wurde eine ATM-Übertragung über PDH-Hierarchiestufen zwischen 1,5 Mbps und 139 Mbps.

Telekommunikationssysteme, die Verbindungen zu standardisierten Übertragungsnetzen wie PDH, SDH oder SONET haben, erfordern i.d.R. eine Synchronisation, um die notwendige Qualität an der Schnittstelle zum Übertragungsnetzwerk zu erreichen. Dabei werden zwei Betriebsarten der Synchronisation unterschieden. Im Falle einer externen Sychronisation wird dem System von einer externen Synchronisationsquelle ein Takt direkt zugeführt. Demgegenüber wird bei einer Synchronisation über die Übertragungsstrecke der Takt aus dem empfangenen Datenstrom der Schnittstelle gewonnen und dem System als Synchronisationsquelle zugeführt. Dazu enthalten die empfangenen Datenrahmen neben der Nutzinformation unter anderem auch Zusatzinformationen, die die Qualität des Taktsignals einer Gegenstelle beschreiben.

Bei einem Teil der Schnittstellentypen in Plesiochroner Digitaler Hierarchie wird die Taktqualität im Timing-Marker-Bit übertragen. Im Falle von SONET und der Synchronen Digitalen Hierarchie wird die Qualität des Taktsignals im sog. SSM-Byte (Synchronisation Status Message) kommuniziert.

Da die Taktqualität einer Taktquelle, zu der das Telekommunikationssystem synchronisiert ist, veränderlich sein und ein Referenztakt auch ausfallen kann, werden zur Synchronisation von Telekommunikationssystemen mindestens zwei zueinander redundante Referenztakte verwendet. Dabei muß der Ausfall eines Referenztaktes vom Telekommunikationssystem erkannt und sodann automatisch auf den redundanten Referenztakt umgeschaltet werden.

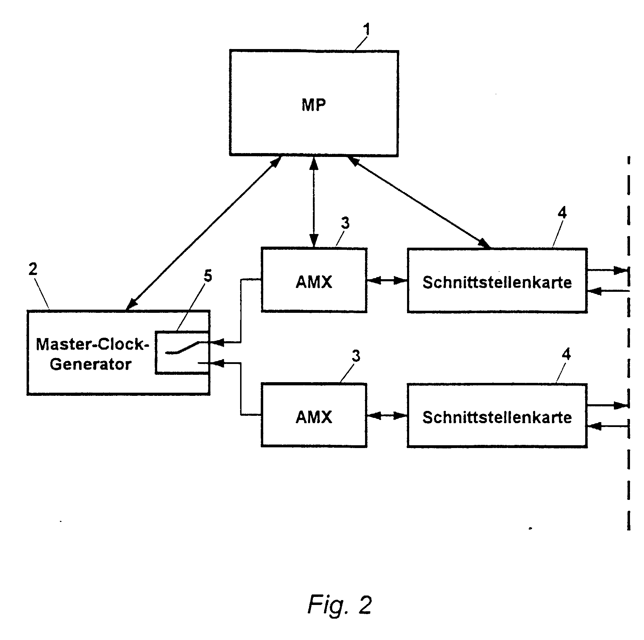

Fig. 2 zeigt ein herkömmliches Telekommunikationssystem, das einen Hauptprozessor MP 1, einen Haupttaktgenerator (Master-Clock-Generator) 2 und zwei periphere Prozessorplattformen 3,4 aufweist. Die Prozessorplattformen nach Fig. 2 weisen einen ATM-Multiplexer AMX 3 und eine Schnittstellenkarte 4 auf und sind mit dem Haupttaktgenerator 2 verbunden. Die Schnittstellenkarten 4 sind mit Übertragungsnetzen verbunden und empfangen im Datenstrom von dort jeweils wenigstens ein Taktsignal, das sie über den AMX 3 an den Haupttaktgenerator 2 weitergeben. Der Haupttaktgenerator 2 enthält einen Taktselektor 5, der eines der empfangenen Taktsignale auswählt und hierzu synchron einen Haupttakt erzeugt.

Der Hauptprozessor 1 verfügt über eine zentrale Datenbank, in der neben Informationen über den Zustand einzelner Baugruppen, Alarmmeldungen über ausgefallene Einheiten und der Anzahl der Referenztakte auch Daten betreffend jeden einzelnen Referenztakt abgelegt sind. Diese taktspezifischen Daten umfassen die Angabe der Schnittstellenkarte, von der der Referenztakt genommen wird, die Priorität, die aktuelle Qualität und die Verfügbarkeit des Referenztaktes sowie Alarmmeldungen über ausgefallene Referenztakte.

Neben der zentralen Datenbank, die von dem Hauptprozessor 1 gehalten wird, verfügt das Telekommunikationssystem ferner über dezentrale (lokale) Datenbanken, auf die beispielsweise der Haupttaktgenerator 2 Zugriff hat. Diese dezentralen Datenbanken sind Abbilder der zentralen Datenbank, enthalten jedoch lediglich solche Daten, die für die jeweilige Einheit benötigt werden. Werden Daten in der zentralen Datenbank verändert, aktualisiert das Telekommunikationssystem auch die dezentralen Datenbanken.

Eine solche Änderung der zentralen Datenbank erfolgt beispielsweise, wenn eine periphere Prozessorplattform oder eine andere Einheit ausfällt, sich die Qualität eines Referenztaktes ändert oder ein neuer Referenztakt eingerichtet wird.

Erkennt eine Prozessorplattform, z. B. eine Schnittstellenkarte 4, den Ausfall eines Referenztaktes, so meldet sie diesen an den Hauptprozessor 1. Der Hauptprozessor schickt eine entsprechende Meldung an den Haupttaktgenerator 2 weiter, woraufhin der Haupttaktgenerator auf den redundanten Referenztakt umschaltet. Der Hauptprozessor übernimmt ferner die Aktualisierung der zentralen Datenbank, die Verteilung der Daten auf die lokalen Datenbanken und die Alarmierung des Ausfalls.

Telekommunikationssysteme der vorgenannten Bauart, die bei der Erzeugung eines Haupttaktes über die beschriebene Ausfallbehandlung verfügen, weisen den Nachteil auf, daß der Taktselektor 5 des Haupttaktgenerators 2 auf den redundanten Referenztakt erst nach der Zeit umschaltet, die der Hauptprozessor 1 für das Empfangen und Weiterleiten von Störungsmeldungen benötigt. Während dieser Zeit verbleibt das Telekommunikationssystem ohne einen geeigneten Referenztakt, so daß sich die Taktfrequenzen verschieben und Datenfehler auf der Übertragungsstrecke auftreten können.

Der Erfindung liegt somit die Aufgabe zugrunde, ein Telekommunikationssystem sowie ein Verfahren zum Erzeugen eines Haupttaktes in einem Telekommunikationssystem mit geringerer Störanfälligkeit anzugeben.

Diese Aufgabe wird durch die Gegenstände der Patentansprüche 1 und 16 gelöst.

Vorteilhafte Ausgestaltungen der Erfindung sind Gegenstände der Patentansprüche 2 bis 15 und 17 bis 30.

Mit der Erfindung wird insbesondere erreicht, daß die Fehlererkennung und Fehlerneutralisierung dezentral abläuft. Dadurch erkennt der Haupttaktgenerator einen Ausfall oder eine Qualitätsverminderung direkt von der peripheren Prozessorplattform und kann so schnell auf einen redundanten Referenztakt umschalten. Dadurch wird die Störungsanfälligkeit des Telekommunikationssystems reduziert.

Ein weiterer Vorteil ergibt sich aus der Möglichkeit, die Aktualisierung der zentralen Datenbank, die Verteilung der Daten an die lokalen Datenbanken und die Alarmierung während der zeitunkritischen Nachbehandlung durchzuführen.

Bevorzugte Ausführungsbeispiele der Erfindung werden nachstehend erläutert. Es zeigen:
- Fig. 1: ein bevorzugtes Ausführungsbeispiel eines erfindungsgemäßen Telekommunikationssystems, und
- Fig. 2: ein herkömmliches Telekommunikationssystem.

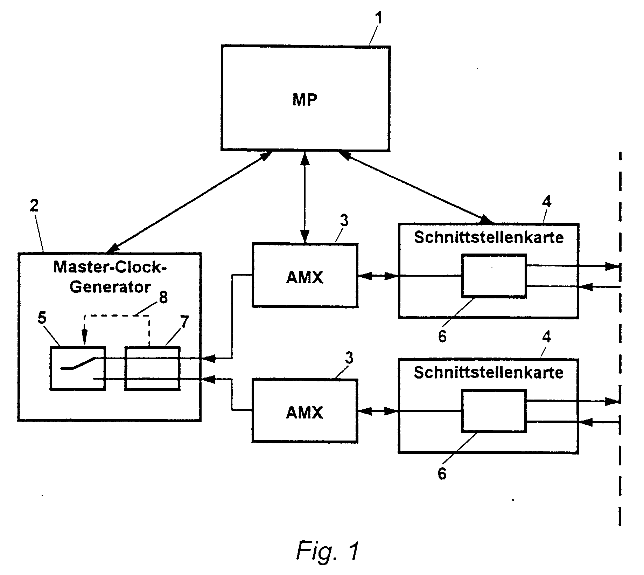

In Fig. 1 ist ein bevorzugtes Ausführungsbeispiel eines Telekommunikationssystems dargestellt, das, wie das oben beschriebene, bekannte Telekommunikationssystem, einen Hauptprozessor 1, einen Haupttaktgenerator 2 mit einem Taktselektor 5 sowie periphere Plattformen 3, 4 umfaßt. Die peripheren Plattformen weisen vorzugsweise wiederum einen ATM-Multiplexer AMX 3 sowie eine Schnittstellenkarte 4 auf. Über das in Fig. 2 beschriebene herkömmliche Telekommunikationssystem hinaus weisen die Schnittstellenkarten 4 Gütedetektoren 6 auf, die die Qualität des von der Schnittstellenkarte 4 empfangenen Taktsignals ermitteln und das Taktsignal bei einer Abnahme der jeweiligen ermittelten Qualität unterbrechen. Beispielsweise kann die Güteermittlung durch den Gütedetektor 6 mittels Lesens und Auswertens des Timing-Marker-Bits bei einer PDH-Schnittstellenkarte oder des SSM-Bytes bei einer SDH- oder SONET-Schnittstellenkarte erfolgen. Gemäß einer anderen Ausführungsform ermittelt der Gütedetektor lediglich den Ausfall des Taktsignales.

Falls der Gütedetektor 6 eine Abnahme der Güte, vorzugsweise unterhalb eines Schwellwertes, oder einen Ausfall erkennt, verhindert er die Weiterleitung des Taktsignales an den Haupttaktgenerator 2 über den ATM-Multiplexer 3. Der Haupttaktgenerator 2 weist gegenüber dem in Fig. 2 dargestellten herkömmlichen Telekommunikationssystem ferner einen Unterbrechungsdetektor 7 auf, der einen Ausfall eines der von dem ATM-Multiplexer 3 und der Schnittstellenkarte 4 gelieferten Taktsignales erkennt. Im Falle einer solchen Unterbrechung weist der Unterbrechungsdetektor 7 über Unterbrechungssteuerleitung 8 den Taktselektor 5 des Haupttaktgenerators 2 an, auf einen redundanten Referenztakt umzuschalten.

Vorzugsweise erfolgt diese Unterbrechung hardwaregesteuert. In einem anderen bevorzugten Ausführungsbeispiel erfolgt die Umschaltung auf den redundanten Referenztakt jedoch softwaregesteuert. Vorzugsweise werden dazu in der lokalen Datenbank befindliche Daten abgefragt.

Nach dem Umschalten auf einen redundanten Referenztakt wird der Hauptprozessor 1 von den peripheren Prozessorplattformen mittels Fehlermeldungen über die Abnahme der Taktqualität und das Umschalten auf einen redundanten Referenztakt informiert, woraufhin der Hauptprozessor 1 die zentrale Datenbank aktualisiert. Anschließend verteilt der Hauptprozessor die aktualisierten Daten auf die lokalen Datenbanken. Schließlich kann die Alarmierung des Fehlers auf dem zentralen Hauptprozessor erfolgen.

Gemäß einer Variante des bevorzugten Ausführungsbeispiels enthält das Telekommunikatonssystem wenigstens drei periphere Prozessorplattformen 3, 4. Bei einer Qualitätsminderung oder einem Ausfall des ausgewählten Taktsignals wird der Taktselektor 5 vom Unterbrechungsdetektor 7 angewiesen, auf einen der verbleibenden redundanten Referenztakte umzuschalten. Der Haupttaktgenerator 2 wählt dann unter Zuhilfenahme der lokalen Datenbank denjenigen Referenztakt aus, dessen Qualität am höchsten ist.

Vorzugsweise ermittelt der Gütedetektor 6 der Schnittstellenkarte 4 die Qualität des empfangenen Taktsignals und unterbricht die Weiterleitung dieses Taktsignales softwaregesteuert. Die Unterbrechung kann jedoch auch hardwaregesteuert erfolgen.

Gemäß einer Weiterbildung der bevorzugten Ausgestaltung ist der Gütedetektor 6 Teil des ATM-Multiplexers 3. Der Gütedetektor 6 kann jedoch auch neben dem ATM-Multiplexer 3 und der Schnittstellenkarte 4 eine eigenständige Einheit sein.

## Patentansprüche

1. Telekommunikationssystem, enthaltend:
wenigstens zwei Einrichtungen (3, 4) zur Bereitstellung jeweils eines zu einer Taktquelle synchronen Taktsignals, wobei die Einrichtungen (3, 4) zur Bereitstellung jeweils mit wenigstens einer der Taktquellen verbunden sind, und
einen Haupttaktgenerator (2) zur Erzeugung eines Haupttaktes des Telekommunikationssystems, wobei der Haupttaktgenerator (2) mit den Bereitstellungseinrichtungen (3, 4) verbunden ist und von dort die Taktsignale empfängt, wobei der Haupttaktgenerator (2) Mittel (5) zum Auswählen eines der Taktsignale aufweist,
**dadurch gekennzeichnet,**
daß die Bereitstellungseinrichtungen (3, 4) Mittel (6) zur Ermittlung der Güte der wenigstens einen Taktquelle aufweisen und die Bereitstellung des jeweiligen Taktsignals bei einer Abnahme der jeweiligen ermittelten Güte unterbrechen, der Haupttaktgenerator (2) Mittel (7) zum Erkennen einer Unterbrechung des ausgewählten Taktsignals aufweist, und
die Mittel (5) zum Auswählen mit den Mitteln (7) zum Erkennen verbunden sind und ein anderes Taktsignal auswählen, wenn das ausgewählte Taktsignal unterbrochen ist.

2. Telekommunikationssystem nach Anspruch 1,
**dadurch gekennzeichnet,**
daß das Telekommunikationssystem wenigstens drei Einrichtungen (3, 4) zur Bereitstellung enthält, und
die Mittel (5) zum Auswählen unter den anderen Taktsignalen das Taktsignal mit der höchsten Güte auswählen, wenn das ausgewählte Taktsignal unterbrochen ist.

3. Telekommunikationssystem nach Anspruch 1 oder 2,
**dadurch gekennzeichnet,**
daß das Telekommunikationssystem ein digitales Telekommunikationssystem ist.

4. Telekommunikationssystem nach einem der Ansprüche 1 bis 3,
**dadurch gekennzeichnet,**
daß das Telekommunikationssystem eine ATM-Architektur aufweist.

5. Telekommunikationssystem nach Anspruch 4,
**dadurch gekennzeichnet,**
daß wenigstens eine der Bereitstellungseinrichtungen (3, 4) ein ATM-Multiplexer ist.

6. Telekommunikationssystem nach einem der Ansprüche 1 bis 5,
**dadurch gekennzeichnet,**
daß wenigstens eine der Bereitstellungseinrichtungen (3, 4) eine Schnittstellenkarte zu einem standardisierten Übertragungsnetz ist.

7. Telekommunikationssystem nach einem der Ansprüche 1 bis 6,
**dadurch gekennzeichnet,**
daß als Taktquellen Übertragungsstrecken verwendet werden, an die das Telekommunikationssystem angeschlossen ist.

8. Telekommunikationssystem nach Anspruch 7,
**dadurch gekennzeichnet,**
daß das Telekommunikationssystem an einer PDH-Übertragungsstrecke angeschlossen ist, und
die Mittel (6) zur Ermittlung der Güte das Timing-Marker-Bit auswerten.

9. Telekommunikationssystem nach Anspruch 7,
**dadurch gekennzeichnet,**
daß das Telekommunikationssystem an einer SDH-Übertragungsstrecke angeschlossen ist, und die Mittel (6) zur Ermittlung der Güte das SSM-Byte auswerten.

10. Telekommunikationssystem nach Anspruch 7,
**dadurch gekennzeichnet,**
daß das Telekommunikationssystem an einer SONET-Übertragungsstrecke angeschlossen ist, und die Mittel (6) zur Ermittlung der Güte das SSM-Byte auswerten.

11. Telekommunikationssystem nach einem der Ansprüche 1 bis 10,
**dadurch gekennzeichnet,**
daß die Bereitstellungseinrichtungen (3, 4) die Bereitstellung auch bei einem Ausfall der jeweiligen Taktquelle unterbrechen.

12. Telekommunikationssystem nach einem der Ansprüche 1 bis 11, d**adurch gekennzeichnet,**
daß die Bereitstellungseinrichtungen (3, 4) die Bereitstellung hardwaregesteuert unterbrechen.

13. Telekommunikationssystem nach einem der Ansprüche 1 bis 11,
**dadurch gekennzeichnet,**
daß die Bereitstellungseinrichtungen (3, 4) die Bereitstellung softwaregesteuert unterbrechen.

14. Telekommunikationssystem nach einem der Ansprüche 1 bis 13,
**dadurch gekennzeichnet,**
daß die Mittel (5) zum Auswählen des anderen Taktsignals das andere Taktsignal hardwaregesteuert auswählen.

15. Telekommunikationssystem nach einem der Ansprüche 1 bis 13,
**dadurch gekennzeichnet,**
daß die Mittel (5) zum Auswählen des anderen Taktsignals das andere Taktsignal softwaregesteuert auswählen.

16. Verfahren zum Erzeugen eines Haupttaktes in einem Telekommunikationssystem, wobei das Verfahren die folgenden Schritte aufweist:
Bereitstellen wenigstens zweier Taktsignale,
Auswählen eines der bereitgestellten Taktsignale, und
Verwenden des ausgewählten Taktsignals als Synchronisationsquelle des Haupttaktes,
**gekennzeichnet durch** die Schritte:
Ermitteln von Güten der Taktsignale,
Unterbrechen eines Taktsignals, falls dessen Güte abnimmt, und
Auswählen eines anderen Taktsignals, falls das ausgewählte Taktsignal unterbrochen ist.

17. Verfahren nach Anspruch 16,
**dadurch gekennzeichnet,**
daß im Schritt des Bereitstellens wenigstens drei Taktsignale bereitgestellt werden, und
im Schritt des Auswählens des anderen Taktsignales dasjenige Taktsignal mit der höchsten Güte ausgewählt wird.

18. Verfahren nach Anspruch 16 oder 17,
**dadurch gekennzeichnet,**
daß das Telekommunikationssystem ein digitales Telekommunikationssystem ist.

19. Verfahren nach einem der Ansprüche 16 bis 18,
**dadurch gekennzeichnet,**
daß das Telekommunikationssystem nach dem ATM-Standard arbeitet.

20. Verfahren nach einem der Ansprüche 16 bis 19,
**dadurch gekennzeichnet,**
daß das Bereitstellen der Taktsignale unter Verwendung wenigstens einer Übertragungsstrecke als Taktquelle erfolgt.

21. Verfahren nach Anspruch 20,
**dadurch gekennzeichnet,**
daß die Übertragungsstrecke eine PDH-Übertragungsstrecke ist und der Schritt des Ermittelns der Güten ein Evaluieren des Timing-Marker-Bits umfaßt.

22. Verfahren nach Anspruch 20,
**dadurch gekennzeichnet,**
daß die Übertragungsstrecke eine SDH-Übertragungsstrecke ist und der Schritt des Ermittelns der Güten ein Evaluieren des SSM-Bytes umfaßt.

23. Verfahren nach Anspruch 20,
**dadurch gekennzeichnet,**
daß die Übertragungsstrecke eine SONET-Übertragungsstrecke ist und der Schritt des Ermittelns der Güten ein Evaluieren des SSM-Bytes umfaßt.

24. Verfahren nach einem der Ansprüche 16 bis 23,
**dadurch gekennzeichnet,**
daß der Schritt des Unterbrechens eines Taktsignals hardwaregesteuert erfolgt.

25. Verfahren nach einem der Ansprüche 16 bis 23,
**dadurch gekennzeichnet,**
daß der Schritt des Unterbrechens eines Taktsignals softwaregesteuert erfolgt.

26. Verfahren nach einem der Ansprüche 16 bis 25,
**dadurch gekennzeichnet,**
daß der Schritt des Auswählens des anderen Taktsignals hardwaregesteuert erfolgt.

27. Verfahren nach einem der Ansprüche 16 bis 25,
**dadurch gekennzeichnet,**
daß der Schritt des Auswählens des anderen Taktsignals softwaregesteuert erfolgt.

28. Verfahren nach Anspruch 27,
**dadurch gekennzeichnet,**
daß der Schritt des Auswählens des anderen Taktsignals einen Schritt des Lesens einer lokalen Datenbank enthält.

29. Verfahren nach einem der Ansprüche 16 bis 28,
**dadurch gekennzeichnet,**
daß nach dem Schritt des Auswählens des anderen Taktsignals ein Schritt des Aktualisierens einer zentralen Datenbank erfolgt.

30. Verfahren nach einem der Ansprüche 16 bis 29,
**dadurch gekennzeichnet,**
daß nach dem Schritt des Auswählens des anderen Taktsignals ein Schritt des Alarmierens erfolgt.
